# EUROPÄISCHE PATENTSCHRIFT

(11) **EP 3 650 682 B1**
(45) Veröffentlichungstag und Bekanntmachung des Hinweises auf die Patenterteilung: **24.02.2021**
(21) Anmeldenummer: 19205449.2
(22) Anmeldetag: 25.10.2019
(51) Int. Cl.: F02M 37/24, F16K 11/14, F16K 31/06, F02M 37/28

(54) **DOPPELANKERMAGNETVENTIL UND EIN SAUGSEITIGES KRAFTSTOFFFILTERSYSTEM**
DOUBLE ARMATURE SOLENOID VALVE AND A SUCTION SIDE FUEL FILTER SYSTEM
ÉLECTROVANNE À DOUBLE ARMATURE ET SYSTÈME DE FILTRE À CARBURANT CÔTÉ ASPIRATION

(30) Priorität: 07.11.2018 DE 102018218970
(43) Veröffentlichungstag der Anmeldung: 13.05.2020
(73) Patentinhaber: Mahle International GmbH, 70376 Stuttgart (DE)
(72) Erfinder: GÄNSWEIN, Matthias, 73732 Esslingen (DE); HÄUSSERMANN, Uli, 70734 Fellbach (DE); HEGDE, Amit, 88677 Markdorf (DE); KELLERMANN, Stanislav, 88677 Markdorf (DE); KIENE, Marco, 88630 Aach-Linz (DE); VOPEL, David, 88213 Ravensburg (DE); WILHELM, Dietmar, 75446 Wiernsheim (DE)
(74) Vertreter: BRP Renaud & Partner mbB Rechtsanwälte Patentanwälte Steuerberater

(56) Entgegenhaltungen:
- DE-A1-102007 005 916
- DE-A1-102016 110 899
- DE-T5-112016 002 713

## Beschreibung

Die Erfindung betrifft ein Doppelankermagnetventil zum Ablassen von Wasser aus einem saugseitigen Kraftstofffiltersystem eines Kraftfahrzeugs. Die Erfindung betrifft auch ein saugseitiges Kraftstofffiltersystem eines Kraftfahrzeugs.

Ein Kraftstofffiltersystem in einem Kraftfahrzeug ist zum Filtern des Kraftstoffs vorgesehen und umfasst üblicherweise ein Wassersammelsystem zum Sammeln vom abgeschiedenen Wasser aus dem Kraftstoff. Besteht bauraumtechnisch keine Möglichkeit das Wasser händisch aus dem Wassersammelsystem auszutragen, so kann ein automatisches oder semi-automatisches Ablasssystem mit einem Magnetventil eingesetzt werden. Das Magnetventil öffnet dann das Wassersammelsystem automatisch oder semi-automatisch und das gesammelte Wasser kann aus dem Wassersammelsystem entfernt und vorschriftsgemäß entsorgt werden. Derartige Magnetventile sind für druckseitige Kraftstofffiltersysteme beispielweise aus DE 10 2016 110 899 A1 und DE 10 2014 216 409 A1 bekannt. Dabei werden in dem druckseitigen Kraftstofffiltersystem zur Steigerung der Funktionssicherheit entweder zwei Magnetventile eingesetzt oder das eine Magnetventil zusätzlich überwacht. Da ein saugseitiges Kraftstofffiltersystem sich von einem druckseitigen Kraftstofffiltersystem grundsätzlich unterscheidet, kann nachteiligerweise ein Magnetventil für das druckseitige Kraftstofffiltersystem nicht in einem saugseitigen Kraftstofffiltersystem verwendet werden Außerdem beschreibt auch DE 11 2016 002 713 T5 ein Magnetventil mit einem axial verstellbaren Anker zum Ablassen von Wasser aus einem Kraftstofffiltersystem. Um den Anker ist ein Wasserzulaufraum angeordnet, der über eine Wasserzulauföffnung mit einem Wassersammelbereich fluidisch verbindbar ist. In einer Schließposition trennt der Anker einen Luftzulaufkanal und einen Wasserablaufkanal von dem Wasserzulaufraum fluidisch. In einer Öffnungsposition verbindet der Anker den Luftzulaufkanal und den Wasserablaufkanal mit dem Wasserzulaufraum fluidisch, so dass Luft einen Unterdruck im Wassersammelbereich ausgleichen kann, und somit Wasser aus dem Wassersammelbereich über den Wasserzulaufraum und den Wasserablaufkanal abfließen kann. Die Herstellung eines solchen Magnetventils ist besonders aufwendig, weil der Anker zwei Kanäle (Luftzulaufkanal und Wasserablaufkanal) gleichzeitig dicht schließen bzw. gleichzeitig öffnen soll. Eine Undichtheit in einem der beiden Kanäle kann Funktionsstörungen des Kraftstofffiltersystem verursachen.

Die Aufgabe der Erfindung ist es daher, für ein Doppelankermagnetventil und ein Kraftstofffiltersystem mit dem Doppelankermagnetventil der gattungsgemäßen Art eine verbesserte oder zumindest alternative Ausführungsform anzugeben, bei der die beschriebenen Nachteile überwunden werden.

Diese Aufgabe wird erfindungsgemäß durch den Gegenstand der unabhängigen Ansprüche gelöst. Vorteilhafte Ausführungsformen sind Gegenstand der abhängigen Ansprüche.

Ein erfindungsgemäßes Doppelankermagnetventil ist zum Ablassen von Wasser aus einem saugseitigen Kraftstofffiltersystem eines Kraftfahrzeugs vorgesehen. Das Doppelankermagnetventil weist dabei einen ersten Anker und einen zweiten Anker auf, die einander gegenüberliegend angeordnet sind und entlang einer gemeinsamen Verstellachse axial aufeinander zu in eine Öffnungsposition und axial voneinander weg in eine Schließposition verstellbar sind. Das Doppelankermagnetventil weist ferner wenigstens eine Rückstellfeder und wenigstens eine zumindest teilweise um die Anker angeordnete Spule auf. Dabei drückt die Rückstellfeder die beiden Anker aus der Öffnungsposition in die Schließposition. Die wenigstens eine Spule kann einen magnetischen Fluss in den beiden Ankern erzeugen und diese gegen die Federkraft der Rückstellfeder aus der Schließposition in die Öffnungsposition verstellen. Das Doppelankermagnetventil weist zudem einen Wasserzulaufraum auf, der zumindest bereichsweise um den zweiten Anker angeordnet ist und über eine Wasserzulauföffnung mit einem Wassersammelbereich des Kraftstofffiltersystems fluidisch verbindbar ist. Der erste Anker ist dabei einem Luftzulaufkanal zum Einlassen von Luft in den Wasserzulaufraum zugeordnet. In der Schließposition trennt der erste Anker den Luftzulaufkanal fluidisch von dem Wasserzulaufraum und in der Öffnungsposition verbindet der erste Anker den Luftzulaufkanal fluidisch mit dem Wasserzulaufraum. Der zweite Anker ist einem Wasserablaufkanal zum Ablaufen von Wasser aus dem Wasserzulaufraum zugeordnet. In der Schließposition trennt der zweite Anker den Wasserablaufkanal fluidisch von dem Wasserzulaufraum und in der Öffnungsposition verbindet der zweite Anker den Wasserablaufkanal fluidisch mit dem Wasserzulaufraum. In der Öffnungsposition kann Luft aus dem Luftzulaufkanal in den Wasserzulaufraum und aus dem Wasserzulaufraum über die Wasserzulauföffnung in den Wassersammelbereich des Kraftstofffiltersystems gelangen und kann einen Unterdruck in dem Wassersammelbereich des Kraftstofffiltersystems ausgleichen. Dadurch kann das Wasser aus dem Wassersammelbereich des Kraftstofffiltersystems in den Wasserzulaufraum und aus dem Wasserzulaufraum über den geöffneten Wasserablaufkanal abfließen.

In der vorliegenden Erfindung bezieht sich der Begriff "betriebsgeeignet ausgerichtet" auf eine Ausrichtung des Doppelankermagnetventils, in der das Doppelankermagnetventil wie vorgesehen betrieben werden kann. In der vorliegenden Erfindung ist das Doppelankermagnetventil betriebsgeeignet ausgerichtet, wenn das Austragen des Wassers nach dem Verstellen der beiden Anker in die Öffnungsposition unter der Wirkung der Erdanziehungskraft erfolgen kann. Die Begriffe "oberhalb" und "unterhalb" sind dabei auf die Ausrichtung der Erdanziehungskraft in dem betriebsgeeignet ausgerichteten Doppelankermagnetventil bezogen. Der Begriff "eingebaut" bezieht sich dabei auf das Doppelankermagnetventil, das mit dem Wassersammelbereich des Kraftstofffiltersystems über die Wasserzulauföffnung fluidisch verbunden ist. Der Wassersammelbereich des Kraftstofffiltersystems und das Kraftstofffiltersystem sind jedoch kein Teil des Doppelankermagnetventils und werden lediglich zur Erläuterung der Funktion des Doppelankermagnetventils herangezogen.

Durch das eingebaute Doppelankermagnetventil kann der Unterdruck in dem Wassersammelbereich des Kraftstofffiltersystems vorteilhaft ausgeglichen werden. Beim Austragen des Wassers aus dem Wassersammelbereich sind die beiden Anker in der Öffnungsposition, so dass der Luftzulaufkanal und der Wasserablaufkanal geöffnet und über den Wasserzulaufraum fluidisch miteinander verbunden sind. Das in dem Wassersammelbereich angesammelte Wasser strömt über die Wasserzulauföffnung in den Wasserzulaufraum und aus dem Wasserzulaufraum über den geöffneten Wasserablaufkanal aus dem Kraftstofffiltersystem und kann gesammelt und vorschriftsgemäß entsorgt werden. Gleichzeitig strömt die Luft über den geöffneten Luftzulaufkanal in den Wasserzulaufraum und aus dem Wasserzulaufraum über die Wasserzulauföffnung in den Wassersammelbereich des Kraftstofffiltersystems und kann den Unterdruck in dem Wassersammelbereich ausgleichen. Dabei liegen der erste Anker und entsprechend der Luftzulaufkanal beim Austragen des Wassers nicht in seinem Strömungsweg, so dass kein Druckverlust verursacht wird. In der Schließposition der beiden Anker sind der Luftzulaufkanal und der Wasserablaufkanal geschlossen. In dem Wassersammelbereich des saugseitigen Kraftstofffiltersystems herrscht dabei ein Unterdruck, so dass das Wasser aus dem Wassersammelbereich über das Doppelankermagnetventil nicht ablaufen kann. Der erste Anker dient zudem als ein Sicherheitsventil in dem Doppelankermagnetventil.

Vorteilhafterweise kann vorgesehen sein, dass eine Mündung des Luftzulaufkanals und eine Mündung des Wasserablaufkanals in dem Wasserzulaufraum einander axial gegenüberliegen und jeweils einen Ventilsitzt für den jeweiligen Anker bilden. Vorteilhafterweise ist dadurch das Doppelankermagnetventil unempfindlich gegenüber einer Schräglage in Bezug auf die Erdanziehungskraft und das Austragen des Wassers aus dem Wassersammelbereich des Kraftstofffiltersystems kann nach dem Überführen der beiden Anker in die Öffnungsposition auch in einer Schräglage ungehindert erfolgen. Die beiden Anker sind ferner durch die wenigstens eine gemeinsame Spule betätigbar, jedoch physisch voneinander getrennt. Dadurch ist eine Gefahr des Verklemmens des Doppelankermagnetventils im Vergleich zu herkömmlichen Lösungen minimiert.

Bei einer Weiterbildung des Doppelankermagnetventils ist vorgesehen, dass der erste Anker und der zweite Anker beim Erzeugen eines magnetischen Flusses durch die wenigstens eine Spule in die Öffnungsposition oder durch die Rückstellfeder in die Schließposition zueinander verzögerungsfrei bringbar sind. Dazu kann vorgesehen sein, dass auf die beiden Anker durch den magnetischen Fluss der wenigstens einen Spule gleiche Öffnungskraft wirkt. Ferner kann die wenigstens eine Rückstellfeder eine gleiche Federkraft auf die beiden Anker ausüben. Die beiden Anker können beispielweise um einen gleichen Verstellweg entlang der Verstellachse verstellbar sein und zudem eine gleiche Masse aufweisen. Ferner können die beiden Anker aus einem identischen Material geformt sein. Insbesondere kann dadurch der Aufbau des Doppelankermagnetventils im Vergleich zu herkömmlichen Lösungen deutlich vereinfacht sein.

Vorteilhafterweise kann vorgesehen sein, dass die wenigstens eine Rückstellfeder eine einzelne Schraubenfeder ist, die zwischen den beiden Ankern angeordnet ist und sich axial unmittelbar auf den ersten Anker und auf den zweiten Anker abstützt. Die Schraubenfeder drückt die beiden Anker entlang der Verstellachse axial voneinander weg in die Schließposition. Durch die einzelne Schraubenfeder kann der Aufbau des Doppelankermagnetventils vereinfacht werden.

Bei einer Weiterbildung des Doppelankermagnetventils ist vorgesehen, dass in dem betriebsgeeignet ausgerichteten Doppelankermagnetventil der Luftzulaufkanal zumindest bereichsweise oberhalb der Wasserzulauföffnung angeordnet ist. Dadurch kann Luft über den geöffneten Luftzulaufkanal in den Wasserzulaufraum ungehindert einströmen und dadurch bei dem eingebauten Doppelankermagnetventil den Unterdruck in dem Wassersammelbereich des saugseitigen Kraftstofffiltersystems ausgleichen. Vorteilhafterweise können in dem betriebsgeeignet ausgerichteten Doppelankermagnetventil der erste Anker oberhalb des zweiten Ankers und dadurch der Luftzulaufkanal oberhalb des Wasserablaufkanals angeordnet sein.

Bei einer vorteilhaften Ausführungsform des Doppelankermagnetventils ist vorgesehen, dass das Doppelankermagnetventil in dem Luftzulaufkanal ein erstes Kugelsitzventil aufweist. Sind das Doppelankermagnetventil betriebsgeeignet ausgerichtet und der erste Anker in der Öffnungsposition, so ist der Luftzulaufkanal bei einem Überdruck in dem Wasserzulaufraum durch das erste Kugelsitzventil gesperrt und bei einem Unterdruck in dem Wasserzulaufraum durch das erste Kugelsitzventil freigegeben. Auf diese vorteilhafte Weise kann ein Austragen des Wassers über den Luftzulaufkanal verhindert werden, falls bei dem eingebauten Doppelankermagnetventil in dem Wasserzulaufraum ausnahmeweise ein Überdruck herrscht.

Vorteilhafterweise kann das Doppelankermagnetventil ein zweites Kugelsitzventil an der Wasserzulauföffnung aufweisen. Sind das Doppelankermagnetventil betriebsgeeignet ausgerichtet und der erste Anker in der Öffnungsposition, ist die Wasserzulauföffnung beim Durchströmen des Wassers durch das zweite Kugelsitzventil freigegeben und beim Durchströmen des Kraftstoffs durch das zweite Kugelsitzventil gesperrt. Dadurch kann ein Austragen des Kraftstoffs durch das eingebaute Doppelankermagnetventil verhindert werden. Dabei kann vorgesehen sein, dass das zweite Kugelsitzventil eine Schwimmkugel mit einer Dichte zwischen der Dichte des Wasser und der Dichte des Kraftstoffs aufweist. In dem eingebauten Doppelankermagnetventil schwimmt dann die Schwimmkugel in dem Kraftstoff auf und sperrt die Wasserzulauföffnung.

Vorteilhafterweise kann vorgesehen sein, dass die beiden Anker in einem Führungsraum entlang der Verstellachse führbar angeordnet sind. Dabei ist in dem Führungsraum für die beiden Anker wenigstens ein Anschlag ausgebildet, an dem die beiden Anker in der Öffnungsposition anliegen. Der erste Anker ist somit innerhalb des Führungsraums entlang der Verstellachse zwischen einer von ihm schließbaren Mündung des Luftzulaufkanals in den Wasserzulaufraum und dem Anschlag führbar. Liegt der erste Anker an der Mündung des Luftzulaufkanals, so sind der Anker in der Schließposition und der Luftzulaufkanal geschlossen. Liegt der erste Anker an dem Anschlag, so sind der erste Anker in der Öffnungsposition und der Luftzulaufkanal geöffnet. Entsprechendes gilt auch für den zweiten Anker, der zwischen einer von ihm schließbaren Mündung des Wasserablaufkanals in den Wasserzulaufraum und dem Anschlag führbar ist. Die beiden Anker können beispielweise zylinderförmig und der Führungsraum hohlzylindrisch ausgestaltet sein. Grundsätzlich sind auch andere Formen denkbar.

Zum fluiddichten Schließen des Luftzulaufkanals kann an dem ersten Anker ein erstes Dichtmittel festgelegt sein. Das erste Dichtmittel dichtet dabei in der Schließposition des ersten Ankers den Luftzulaufkanal zu dem Wasserzulaufraum ab. Das erste Dichtmittel kann dabei in der Schließposition um eine Mündung des Luftzulaufkanals in den Wasserzulaufraum dichtend anliegen und durch die Federkraft der Rückstellfeder mit der Mündung zusätzlich verpresst sein. An dem zweiten Anker kann ein zweites Dichtmittel festgelegt sein, das in der Schließposition des zweiten Ankers den Wasserablaufkanal zu dem Wasserzulaufraum abdichtet. Das zweite Dichtmittel kann dabei in der Schließposition um eine Mündung des Wasserablaufkanals in den Wasserzulaufraum dichtend anliegen und durch die Federkraft der Rückstellfeder mit der Mündung zusätzlich verpresst sein. Das erste Dichtmittel und das zweite Dichtmittel können aus einem elastischen Material geformt sein, das zweckgemäß wasser- und kraftstoffbeständig ist.

Die Erfindung betrifft auch ein saugseitiges Kraftstofffiltersystem eines Kraftfahrzeugs mit einem Wassersammelbereich zum Sammeln von abgeschiedenem Wasser aus dem Kraftstoff und mit dem oben beschriebenen Doppelankermagnetventil. Der Wassersammelbereich ist dabei mit dem Doppelankermagnetventil fluidisch verbunden, so dass das Wasser aus dem Wassersammelbereich des Kraftstofffiltersystems über das Doppelankermagnetventil abfließen kann.

Weitere wichtige Merkmale und Vorteile der Erfindung ergeben sich aus den Unteransprüchen, aus den Zeichnungen und aus der zugehörigen Figurenbeschreibung anhand der Zeichnungen.

Bevorzugte Ausführungsbeispiele der Erfindung sind in den Zeichnungen dargestellt und werden in der nachfolgenden Beschreibung näher erläutert, wobei sich gleiche Bezugszeichen auf gleiche oder ähnliche oder funktional gleiche Komponenten beziehen.

Es zeigen, jeweils schematisch
- Fig. 1: eine Schnittansicht eines erfindungsgemäßen Doppelankermagnetventils;
- Fig. 2 und 3: Ansichten des erfindungsgemäßen Doppelankermagnetventils;
- Fig. 4: eine Schnittansicht eines saugseitigen Kraftstofffiltersystems mit dem erfindungsgemäßen Doppelankermagnetventil.

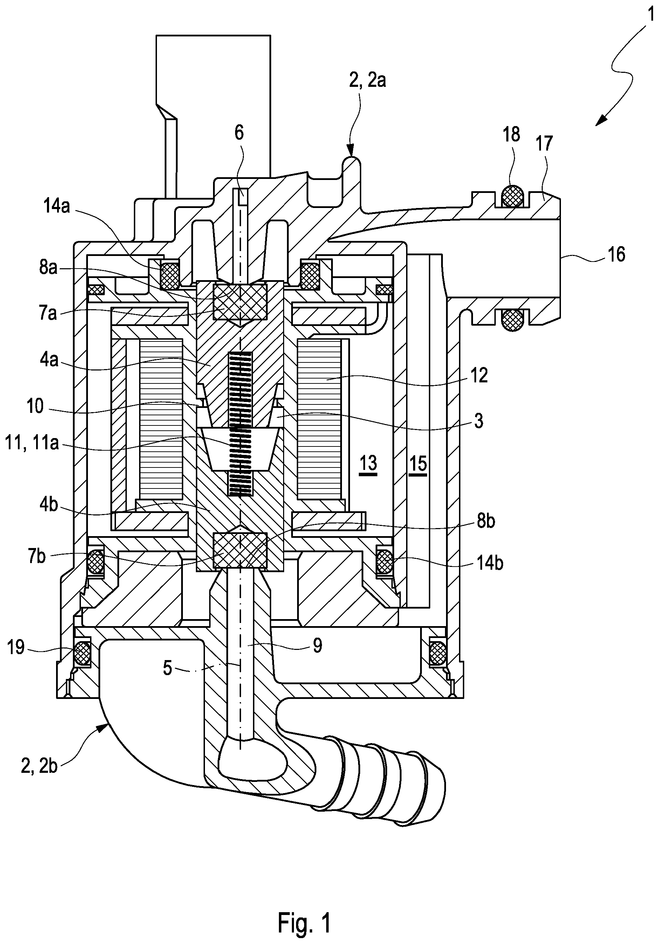

Fig. 1 zeigt eine Schnittansicht eines erfindungsgemäßen Doppelankermagnetventils 1 zum Ablassen von Wasser aus einem saugseitigen Kraftstofffiltersystem eines Kraftfahrzeugs. Das Doppelankermagnetventil 1 weist ein Ventilgehäuse 2 auf, das in diesem Ausführungsbeispiel zweiteilig aus einem topfförmigen Gehäuseteil 2a und einem Deckel 2b gebildet ist. Der Deckel 2b ist in dem Gehäuseteil 2a festgelegt und zu diesem durch eine Ringdichtung 19 abgedichtet. In dem Gehäuseteil 2a des Ventilgehäuses 2 ist ein Führungsraum 3 ausgebildet, in dem ein erster Anker 4a und ein zweiter Anker 4b einander gegenüberliegend angeordnet sind. Die beiden Anker 4a und 4b sind innerhalb des Führungsraumes 3 entlang einer gemeinsamen Verstellachse 5 axial aufeinander zu in eine Öffnungsposition und axial voneinander weg in eine Schließposition - wie hier gezeigt - verstellbar.

Der erste Anker 4a ist dabei einem Luftzulaufkanal 6 zugeordnet und liegt in der Schließposition - wie hier gezeigt - mit einem ersten Dichtmittel 7a an einer Mündung 8a des Luftzulaufkanals 6 dichtend an. Die Mündung 8a des Luftzulaufkanals 6 bildet hier einen Ventilsitz für den ersten Anker 4a. Der zweite Anker 4b ist einem Wasserablaufkanal 9 zugeordnet und liegt in der Schließposition - wie hier gezeigt - mit einem zweiten Dichtmittel 7b an einer Mündung 8b des Wasserablaufkanals 9 dichtend an. Die Mündung 8b des Wasserablaufkanals 9 bildet hier einen Ventilsitz für den zweiten Anker 4b. Das erste Dichtmittel 7a und das zweite Dichtmittel 7b sind zweckgemäß aus einem elastischen, wasser- und kraftstoffbeständigen Material geformt.

Zwischen den beiden Ankern 4a und 4b ist ein Anschlag 10 ausgeformt, der radial in den Führungsraum 3 hineinragt. Die beiden Anker 4a und 4b sind zwischen dem Anschlag 10 und dem jeweiligen Ventilsitz in dem Führungsraum 3 entlang der Verstellachse 5 führbar. In der Öffnungsposition liegen dabei die beiden Anker 4a und 4b an dem Anschlag 10 an und in der Schließposition - wie hier gezeigt - liegen die beiden Anker 4a und 4b an der jeweiligen Mündung 8a und 8b dichtend an. In der Schließposition sind demnach der Luftzulaufkanal 6 und der Wasserablaufkanal 9 geschlossen und in der Öffnungsposition sind der Luftzulaufkanal 6 und der Wasserablaufkanal 9 geöffnet.

Das Doppelankermagnetventil 1 weist ferner eine Rückstellfeder 11 - hier eine einzige Schraubenfeder 11a - auf. Die Rückstellfeder 11 ist zwischen den beiden Ankern 4a und 4b angeordnet und stützt sich axial unmittelbar auf die beiden Anker 4a und 4b ab. Die Rückstellfeder 11 drückt die beiden Anker 4a und 4b axial voneinander weg in die Schließposition. Um den Führungsraum 3 und entsprechend um die beiden Anker 4a und 4b ist zudem eine Spule 12 angeordnet. Die Spule 12 kann einen magnetischen Fluss in den beiden Ankern 4a und 4b erzeugen und diese gegen die Federkraft der Rückstellfeder 11 aus der Schließposition in die Öffnungsposition verstellen. Die beiden Anker 4a und 4b sind zweckgemäß aus einem Material geformt, in dem der magnetische Fluss erzeugbar ist.

In Fig. 1 befinden sich die beiden Anker 4a und 4b in der Schließposition und sind durch die Federkraft der Rückstellfeder 11 an die jeweiligen Mündungen 8a und 8b dichtend angepresst. Die Spule 12 ist ausgeschaltet und erzeugt keinen magnetischen Fluss in den beiden Ankern 4a und 4b. Zum Verstellen der beiden Anker 4a und 4b in die Öffnungsposition wird durch die Spule 12 der magnetische Fluss in den beiden Ankern 4a und 4b erzeugt. Die beiden Anker 4a und 4b bewegen sich gegen die Federkraft der Rückstellfeder 11 aufeinander zu bis zu dem Anschlag 10. Der Luftzulaufkanal 6 und der Wasserablaufkanal 9 sind geöffnet. Sobald die Spule 12 ausgeschaltet ist und keinen magnetischen Fluss in den beiden Ankern 4a und 4b mehr erzeugt, sind die beiden Anker 4a und 4b durch die Rückstellfeder 11 in die Schließposition verstellt. Der Luftzulaufkanal 6 und der Wasserablaufkanal 9 sind geschlossen. Die Spule 12 ist in einem Spulenraum 13 innerhalb des Ventilgehäuses 2 durch ringförmige Dichtungen 14a und 14b vor Wasser geschützt. Die Dichtungen 14a und 14b sind zweckgemäß aus einem elastischen Material geformt und wasser- und kraftstoffbeständig.

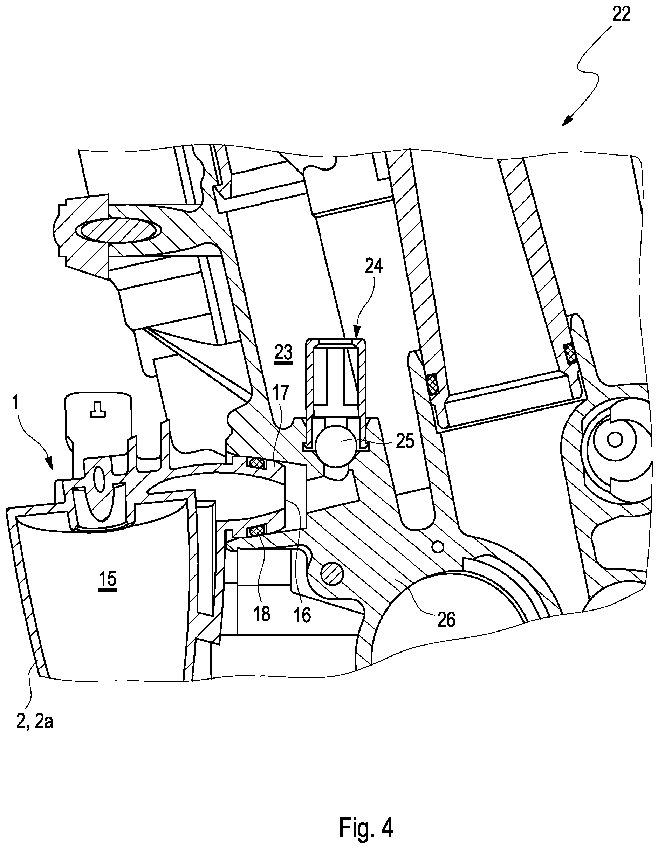

Das Doppelankermagnetventil 1 weist ferner einen Wasserzulaufraum 15 auf, der innerhalb des Ventilgehäuses 2 angeordnet ist. Der Wasserzulaufraum 15 ist bereichsweise um den ersten Anker 4a und um den zweiten Anker 4b ausgebildet und kann mit einem Wassersammelbereich des saugseitigen Kraftstofffiltersystems - siehe dazu Fig. 4 - fluidisch verbunden sein. Dazu ist an dem Ventilgehäuse 2 ein Kontaktstutzen 17 mit einer Wasserzulauföffnung 16 ausgebildet. Der Kontaktstutzen 17 kann zu einem Gehäuse um den Wassersammelbereich über eine Ringdichtung 18 - siehe auch Fig. 4 - abgedichtet sein. In der Schließposition - wie hier gezeigt - trennt der erste Anker 4a den Luftzulaufkanal 6 fluidisch von dem Wasserzulaufraum 15 und in der Öffnungsposition verbindet der erste Anker 4a den Luftzulaufkanal 6 fluidisch mit dem Wasserzulaufraum 15. In der Schließposition - wie hier gezeigt - trennt der zweite Anker 4b den Wasserablaufkanal 9 fluidisch von dem Wasserzulaufraum 15 und in der Öffnungsposition verbindet der zweite Anker 4b den Wasserablaufkanal 9 fluidisch mit dem Wasserzulaufraum 15.

Bei dem eingebauten Doppelankermagnetventil 1 und in der Öffnungsposition der beiden Anker 4a und 4b sind folglich der Luftzulaufkanal 6, der Wasserablaufkanal 9, der Wasserzulaufraum 15 und der Wassersammelbereich des saugseitigen Kraftstofffiltersystems fluidisch miteinander verbunden. Das in dem Wassersammelbereich angesammelte Wasser strömt dann über die Wasserzulauföffnung 16 in den Wasserzulaufraum 15 und aus dem Wasserzulaufraum 15 über den geöffneten Wasserablaufkanal 9 aus dem Doppelankermagnetventil 1 raus. Gleichzeitig strömt die Luft über den geöffneten Luftzulaufkanal 6 in den Wasserzulaufraum 15 und aus dem Wasserzulaufraum 15 über die Wasserzulauföffnung 16 in den Wassersammelbereich des Kraftstofffiltersystems und gleicht dort den Unterdruck aus. Der erste Anker 4a und der Luftzulaufkanal 6 liegen dabei nicht im Strömungsweg, so dass kein Druckverlust in dem saugseitigen Kraftstofffiltersystem verursacht wird.

In dem betriebsgeeignet ausgerichteten Doppelankermagnetventil 1 ist der Luftzulaufkanal 6 oberhalb der Wasserzulauföffnung 16 angeordnet, so dass die Luft bei dem geöffneten Luftzulaufkanal 6 in den Wasserzulaufraum 15 ungehindert einströmen kann. Ferner ist der erste Anker 4a oberhalb des zweiten Ankers 4b und dadurch der Luftzulaufkanal 6 oberhalb des Wasserablaufkanals 9 angeordnet. Das Austragen des Wassers aus dem Wassersammelbereich des Kraftstofffiltersystems erfolgt folglich unter der Wirkung der Erdanziehungskraft. In der Schließposition - wie hier gezeigt - sind die beiden Anker 4a und 4b und entsprechend der Luftzulaufkanal 6 und der Wasserablaufkanal 9 geschlossen. In dem saugseitigen Kraftstofffiltersystem und in dem Wassersammelbereich herrscht dabei ein Unterdruck, so dass das Wasser aus dem Wassersammelbereich über das eingebaute Doppelankermagnetventil 1 nicht ablaufen kann. Der erste Anker 4a dient zudem als ein Sicherheitsventil in dem Doppelankermagnetventil 1.

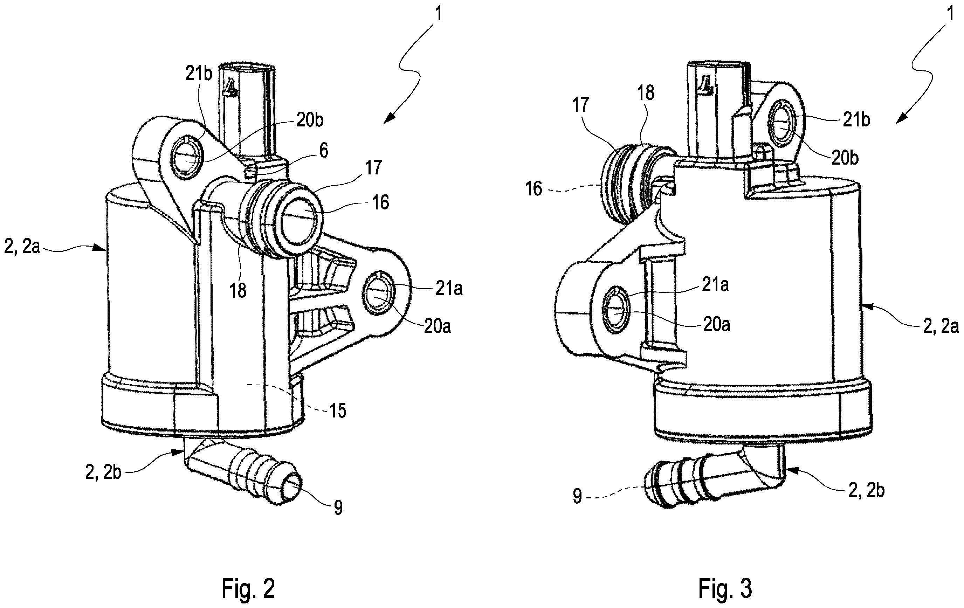

Fig. 2 und Fig. 3 zeigen Ansichten des Doppelankermagnetventils 1. Insbesondere sind hier Befestigungsöffnungen 20a und 20b sichtbar, durch die das Doppelankermagnetventil 1 in dem Kraftfahrzeug festlegbar ist. Innerhalb der Befestigungsöffnungen 20a und 20b sind Kompressionsanlagen 21a und 21b angeordnet.

Fig. 4 zeigt eine Schnittansicht eines saugseitigen Kraftstofffiltersystems 22 mit dem erfindungsgemäßen Doppelankermagnetventil 1 und mit einem Wassersammelbereich 23. Der Wasserzulaufraum 15 des Doppelankermagnetventils 1 - hier nur teilweise gezeigt - ist mit dem Wassersammelbereich 23 des Kraftstofffiltersystems 22 fluidisch verbunden. Dazu ist der Kontaktstutzen 17 an einem Gehäuse 26 um den Wassersammelbereich 23 festgelegt und durch die Ringdichtung 18 zu diesem abgedichtet. In dem Kraftstofffiltersystem 22 ist zudem an der Wasserzulauföffnung 16 ein Kugelsitzventil 24 mit einer Schwimmkugel 25 angeordnet. Sind die beiden Anker 4a und 4b - hier nicht sichtbar - in der Öffnungsposition, so ist die Wasserzulauföffnung 16 beim Durchströmen des Wassers durch das Kugelsitzventil 24 freigegeben und beim Durchströmen des Kraftstoffs durch das Kugelsitzventil 24 gesperrt. Dadurch kann ein Austragen des Kraftstoffs durch das Doppelankermagnetventil 1 verhindert werden. Die Schwimmkugel 25 weist eine entsprechend angepasste Dichte auf, die zwischen der Dichte des Wassers und des Kraftstoffs liegt.

## Patentansprüche

1. Doppelankermagnetventil (1) zum Ablassen von Wasser aus einem saugseitigen Kraftstofffiltersystem (22) eines Kraftfahrzeugs,
- wobei das Doppelankermagnetventil (1) einen ersten Anker (4a) und einen zweiten Anker (4b) aufweist, die einander gegenüberliegend angeordnet sind und entlang einer gemeinsamen Verstellachse (5) axial aufeinander zu in eine Öffnungsposition und axial voneinander weg in eine Schließposition verstellbar sind,
- wobei das Doppelankermagnetventil (1) wenigstens eine Rückstellfeder (11) und wenigstens eine zumindest teilweise um die die Anker (4a, 4b) angeordnete Spule (12) aufweist,
- wobei die Rückstellfeder (11) die beiden Anker (4a, 4b) aus der Öffnungsposition in die Schließposition drückt und die wenigstens eine Spule (12) einen magnetischen Fluss in den beiden Ankern (4a, 4b) erzeugen und diese gegen die Federkraft der Rückstellfeder (11) aus der Schließposition in die Öffnungsposition verstellen kann,
- wobei das Doppelankermagnetventil (1) einen Wasserzulaufraum (15) aufweist, der zumindest bereichsweise um den zweiten Anker (4b) angeordnet ist und über eine Wasserzulauföffnung (16) mit einem Wassersammelbereich (23) des Kraftstofffiltersystems (22) fluidisch verbindbar ist,
- wobei der erste Anker (4a) einem Luftzulaufkanal (6) zum Einlassen von Luft in den Wasserzulaufraum (15) zugeordnet ist und in der Schließposition den Luftzulaufkanal (6) von dem Wasserzulaufraum (15) fluidisch trennt und in der Öffnungsposition den Luftzulaufkanal (6) mit dem Wasserzulaufraum (15) fluidisch verbindet,
- wobei der zweite Anker (4b) einem Wasserablaufkanal (9) zum Ablaufen von Wasser aus dem Wasserzulaufraum (15) zugeordnet ist und in der Schließposition den Wasserablaufkanal (9) von dem Wasserzulaufraum (15) fluidisch trennt und in der Öffnungsposition den Wasserablaufkanal (9) mit dem Wasserzulaufraum (15) fluidisch verbindet,
- wobei in der Öffnungsposition Luft aus dem Luftzulaufkanal (6) in den Wasserzulaufraum (15) und aus dem Wasserzulaufraum (15) über die Wasserzulauföffnung (16) in den Wassersammelbereich (23) des Kraftstofffiltersystems (22) gelangen und einen Unterdruck in dem Wassersammelbereich (23) des Kraftstofffiltersystems (22) ausgleichen kann, so dass das Wasser aus dem Wassersammelbereich (23) des Kraftstofffiltersystems (22) in den Wasserzulaufraum (15) und aus dem Wasserzulaufraum (15) über den geöffneten Wasserablaufkanal (9) abfließen kann.

2. Doppelankermagnetventil nach Anspruch 1,
**dadurch gekennzeichnet,**
**dass** eine Mündung (8a) des Luftzulaufkanals (6) und eine Mündung (8b) des Wasserablaufkanals (9) in dem Wasserzulaufraum (15) einander axial gegenüberliegen und jeweils einen Ventilsitzt für den jeweiligen Anker (4a, 4b) bilden.

3. Doppelankermagnetventil nach Anspruch 1 oder 2,
**dadurch gekennzeichnet,**
**dass** der erste Anker (4a) und der zweite Anker (4b) beim Erzeugen eines magnetischen Flusses durch die wenigstens eine Spule (12) in die Öffnungsposition oder durch die Rückstellfeder (11) in die Schließposition zueinander verzögerungsfrei bringbar sind.

4. Doppelankermagnetventil nach einem der vorangehenden Ansprüche,
**dadurch gekennzeichnet,**
**dass** die wenigstens eine Rückstellfeder (11) eine einzelne Schraubenfeder (11a) ist, die zwischen den beiden Ankern (4a, 4b) angeordnet ist und sich axial unmittelbar auf den ersten Anker (4a) und auf den zweiten Anker (4b) abstützt.

5. Doppelankermagnetventil nach einem der vorangehenden Ansprüche,
**dadurch gekennzeichnet,**
- **dass** in dem betriebsgeeignet ausgerichteten Doppelankermagnetventil (1) der Luftzulaufkanal (6) zumindest bereichsweise oberhalb der Wasserzulauföffnung (16) angeordnet ist, so dass Luft über den Luftzulaufkanal (6) in den Wasserzulaufraum (15) einströmen kann, und/oder
- **dass** in dem betriebsgeeignet ausgerichteten Doppelankermagnetventil (1) der erste Anker (4a) oberhalb des zweiten Ankers (4b) und dadurch der Luftzulaufkanal (6) oberhalb des Wasserablaufkanals (9) in den Wasserzulaufraum (15) einmünden.

6. Doppelankermagnetventil nach einem der vorangehenden Ansprüche,
**dadurch gekennzeichnet,**
**dass** das Doppelankermagnetventil (1) in dem Luftzulaufkanal (6) ein erstes Kugelsitzventil aufweist, das in dem betriebsgeeignet ausgerichteten Doppelankermagnetventil (1) in der Öffnungsposition des ersten Ankers (4a) und bei einem Überdruck in dem Wasserzulaufraum (15) den Luftzulaufkanal (6) sperrt und in der Öffnungsposition des ersten Ankers (4a) und bei einem Unterdruck in dem Wasserzulaufraum (15) freigibt.

7. Doppelankermagnetventil nach einem der vorangehenden Ansprüche,
**dadurch gekennzeichnet,**
**dass** das Doppelankermagnetventil (1) an der Wasserzulauföffnung (16) ein zweites Kugelsitzventil (24) aufweist, das in dem betriebsgeeignet ausgerichteten Doppelankermagnetventil (1) beim Durchströmen des Wassers durch das zweite Kugelsitzventil (24) die Wasserzulauföffnung (16) freigibt und beim Durchströmen des Kraftstoffs durch das zweite Kugelsitzventil (24) die Wasserzulauföffnung (16) sperrt.

8. Doppelankermagnetventil nach Anspruch 7,
**dadurch gekennzeichnet,**
**dass** das zweite Kugelsitzventil (24) eine Schwimmkugel (25) mit einer Dichte zwischen der Dichte des Wasser und der Dichte des Kraftstoffs aufweist, so dass in dem betriebsgeeignet ausgerichteten Doppelankermagnetventil (1) die Schwimmkugel (25) in dem Kraftstoff aufschwimmt und das Durchströmen durch die Wasserzulauföffnung sperrt.

9. Doppelankermagnetventil nach einem der vorangehenden Ansprüche,
**dadurch gekennzeichnet,**
- **dass** an dem ersten Anker (4a) ein erstes Dichtmittel (7a) festgelegt ist, das in der Schließposition des ersten Ankers (4a) den Luftzulaufkanal (6) zu dem Wasserzulaufraum (15) abdichtet, und/oder
- **dass** an dem zweiten Anker (4b) ein zweites Dichtmittel (7b) festgelegt ist, das in der Schließposition des zweiten Ankers (4b) den Wasserablaufkanal (9) zu dem Wasserzulaufraum (15) abdichtet.

10. Doppelankermagnetventil nach einem der vorangehenden Ansprüche,
**dadurch gekennzeichnet,**
- **dass** die beiden Anker (4a, 4b) in einem Führungsraum (3) entlang der Verstellachse (5) führbar angeordnet sind, und
- **dass** in dem Führungsraum (3) für die beiden Anker (4a, 4b) wenigstens ein Anschlag (10) ausgebildet ist, an dem die beiden Anker (4a, 4b) in der Öffnungsposition anliegen.

11. Saugseitiges Kraftstofffiltersystem (22) eines Kraftfahrzeugs,
- wobei das Kraftstofffiltersystem (22) einen Wassersammelbereich (23) zum Sammeln von abgeschiedenem Wasser aus dem Kraftstoff und ein Doppelankermagnetventil (1) nach einem der vorangehenden Ansprüche aufweist,
- wobei der Wassersammelbereich (23) mit dem Doppelankermagnetventil (1) fluidisch verbunden ist, so dass das Wasser aus dem Wassersammelbereich (23) des Kraftstofffiltersystems über den Doppelankermagnetventil (1) abfließen kann.

## Claims

1. Double armature solenoid valve (1) for draining water from a suction side fuel filter system (22) of a motor vehicle,
- wherein the double armature solenoid valve (1) has a first armature (4a) and a second armature (4b) which are arranged opposite one another and can be adjusted axially towards one another into an open position and axially away from one another into a closed position along a common adjustment axis (5),
- wherein the double armature solenoid valve (1) has at least one return spring (11) and at least one coil (12) arranged at least partially around the armatures (4a, 4b),
- wherein the return spring (11) presses the two armatures (4a, 4b) from the open position into the closed position and the at least one coil (12) generates a magnetic flux in the two armatures (4a, 4b) and these can be adjusted against the spring force of the return spring (11) from the closed position to the open position,
- wherein the double armature solenoid valve (1) has a water inlet chamber (15) which is arranged at least partially around the second armature (4b) and can be fluidly connected to a water collection area (23) of the fuel filter system (22) via a water inlet opening (16),
- wherein the first armature (4a) is assigned to an air inlet channel (6) for letting air into the water inlet chamber (15) and in the closed position fluidically separates the air inlet channel (6) from the water inlet chamber (15) and in the open position fluidically connects the air inlet channel (6) to the water inlet chamber (15),
- wherein the second armature (4b) is assigned to a water drainage channel (9) for draining water from the water inlet chamber (15) and in the closed position fluidically separates the water drainage channel (9) from the water inlet chamber (15) and in the open position fluidically connects the water drainage channel (9) to the water inlet chamber (15),
- wherein in the open position air from the air inlet channel (6) can enter the water inlet chamber (15), and from the water inlet chamber (15) can enter the water collection area (23) of the fuel filter system (22) via the water inlet opening (16) and can compensate a negative pressure in the water collection area (23) of the fuel filter system (22), so that the water can flow out of the water collection area (23) of the fuel filter system (22) into the water inlet chamber (15) and out of the water inlet chamber (15) via the open water drainage channel (9).

2. Double armature solenoid valve according to claim 1,
**characterised in that**
an opening (8a) of the air inlet channel (6) and an opening (8b) of the water drainage channel (9) in the water inlet chamber (15) are axially opposite one another and each form a valve seat for the respective armature (4a, 4b).

3. Double armature solenoid valve according to claim 1 or 2,
**characterised in that**
the first armature (4a) and the second armature (4b) can be brought into the open position by the at least one coil (12) or into the closed position by the return spring (11) without delay when generating a magnetic flux.

4. Double armature solenoid valve according to any one of the preceding claims,
**characterised in that**
the at least one return spring (11) is a single helical spring (11a) which is arranged between the two armatures (4a, 4b) and is axially supported directly on the first armature (4a) and on the second armature (4b).

5. Double armature solenoid valve according to any one of the preceding claims,
**characterised in that**
- in the double armature solenoid valve (1), which is aligned in a manner suitable for operation, the air inlet channel (6) is arranged at least in some areas above the water inlet opening (16) so that air can flow into the water inlet chamber (15) via the air inlet channel (6), and/or
- in the double armature solenoid valve (1), which is aligned in a manner suitable for operation, the first armature (4a) above the second armature (4b), and thereby the air inlet channel (6) above the water drainage channel (9), open into the water inlet chamber (15).

6. Double armature solenoid valve according to any one of the preceding claims,
**characterised in that**
the double armature solenoid valve (1) in the air inlet channel (6) has a first ball seat valve which, in the double armature solenoid valve (1), which is aligned in a manner suitable for operation, blocks the air inlet channel (6) in the open position of the first armature (4a) and in case of overpressure in the water inlet chamber (15) and releases this in the open position of the first armature (4a) and in the event of a negative pressure in the water inlet chamber (15).

7. Double armature solenoid valve according to any one of the preceding claims,
**characterised in that**
the double armature solenoid valve (1) at the water inlet opening (16) has a second ball seat valve (24), which in the double armature solenoid valve (1), which is aligned in a manner suitable for operation, releases the water inlet opening (16) when the water flows through the second ball seat valve (24) and blocks the water inlet opening (16) when fuel flows through the second ball seat valve (24).

8. Double armature solenoid valve according to claim 7,
**characterised in that**
the second ball seat valve (24) has a floating ball (25) with a density between the density of the water and the density of the fuel, so that in the double armature solenoid valve (1), which is aligned in a manner suitable for operation, the floating ball (25) floats in the fuel and blocks the flow through the water inlet opening.

9. Double armature solenoid valve according to any one of the preceding claims,
**characterised in that**
- on the first armature (4a) a first sealing means (7a) is fixed, which in the closed position of the first armature (4a) seals the air inlet channel (6) to the water inlet chamber (15), and/or
- on the second armature (4b) a second sealing means (7b) is fixed, which in the closed position of the second armature (4b) seals the water drainage channel (9) to the water inlet chamber (15).

10. Double armature solenoid valve according to any one of the preceding claims, **characterised in that**
- the two armatures (4a, 4b) are arranged in a guide space (3) so that they can be guided along the adjustment axis (5), and
- the guide space (3) for the two armatures (4a, 4b) at least one stop (10) is formed, against which the two armatures (4a, 4b) abut in the open position.

11. Suction-side fuel filter system (22) of a motor vehicle,
- wherein the fuel filter system (22) has a water collection area (23) for collecting deposited water from the fuel and a double armature solenoid valve (1) according to any one of the preceding claims,
- wherein the water collection area (23) is fluidically connected to the double armature solenoid valve (1) so that the water can flow out of the water collection area (23) of the fuel filter system via the double armature solenoid valve (1).

## Revendications

1. Electrovanne à double armature (1) permettant de vidanger l'eau d'un système de filtre à carburant (22), situé du côté aspiration, d'un véhicule automobile,
- dans laquelle l'électrovanne à double armature (1) présente une première armature (4a) et une seconde armature (4b) qui sont agencées face à face et peuvent être ajustées axialement l'une sur l'autre dans une position d'ouverture et axialement éloignée l'une de l'autre dans une position de fermeture le long d'un axe d'ajustement (5) commun,
- dans laquelle l'électrovanne à double armature (1) présente au moins un ressort de rappel (11) et au moins une bobine (12) agencée au moins partiellement autour des armatures (4a, 4b),
- dans laquelle le ressort de rappel (11) presse les deux armatures (4a, 4b) depuis la position d'ouverture jusqu'à la position de fermeture et la au moins une bobine (12) peut générer un flux magnétique dans les deux armatures (4a, 4b) et ajuster celles-ci depuis la position de fermeture jusqu'à la position d'ouverture à l'encontre de la force de ressort du ressort de rappel (11),
- dans laquelle l'électrovanne à double armature (1) présente un espace d'amenée d'eau (15) qui est agencé au moins localement autour de la seconde armature (4b) et peut être relié de manière fluidique à une région de collecte d'eau (23) du système de filtre à carburant (22) par l'intermédiaire d'une ouverture d'amenée d'eau (16),
- dans laquelle la première armature (4a) est associée à un canal d'amenée d'air (6) permettant de laisser entrer de l'air dans l'espace d'amenée d'eau (15) et, dans la position de fermeture, sépare de manière fluidique le canal d'amenée d'air (6) de l'espace d'amenée d'eau (15) et, dans la position d'ouverture, relie de manière fluidique le canal d'amenée d'air (6) à l'espace d'amenée d'eau (15),
- dans laquelle la seconde armature (4b) est associée à un canal d'évacuation d'eau (9) permettant de drainer de l'eau hors de l'espace d'amenée d'eau (15) et, dans la position de fermeture, sépare de manière fluidique le canal d'évacuation d'eau (9) et l'espace d'amenée d'eau (15) et, dans la position d'ouverture, relie de manière fluidique le canal d'évacuation d'eau (9) à l'espace d'amenée d'eau (15),
- dans laquelle, dans la position d'ouverture, de l'air peut passer du canal d'amenée d'air (6) à l'espace d'amenée d'eau (15) et, en passant par l'ouverture d'amenée d'eau (16) du système de filtre à carburant (22), de l'espace d'amenée d'eau (15) à la région de collecte d'eau (23) et peut compenser une pression négative dans la région de collecte d'eau (23) du système de filtre à carburant (22) de sorte que l'eau peut s'écouler hors de la région de collecte d'eau (23) du système de filtre à carburant (22) jusqu'à l'espace d'amenée d'eau (15) et, en passant par le canal d'évacuation d'eau (9) ouvert, peut s'écouler hors de l'espace d'amenée d'eau (15).

2. Electrovanne à double armature selon la revendication 1,
**caractérisée en ce que**,
une bouche (8a) du canal d'amenée d'air (6) et une bouche (8b) du canal d'évacuation d'eau (9) se font face axialement au sein de l'espace d'amenée d'eau (15) et forment respectivement un siège de vanne pour l'armature (4a, 4b) respective.

3. Electrovanne à double armature selon la revendication 1 ou 2,
**caractérisée en ce que**,
la première armature (4a) et la seconde armature (4b) peuvent être amenées sans retard dans la position d'ouverture lorsqu'un flux magnétique est généré par la au moins une bobine (12) ou dans la position de fermeture grâce au ressort de rappel (11).

4. Electrovanne à double armature selon l'une quelconque des revendications précédentes,
**caractérisée en ce que**,
le au moins un ressort de rappel (11) est un ressort hélicoïdal (11a) indépendant qui est agencé entre les deux armatures (4a, 4b) et prend appui axialement directement sur la première armature (4a) et sur la seconde armature (4b).

5. Electrovanne à double armature selon l'une quelconque des revendications précédentes,
**caractérisée en ce que**,
- au sein de l'électrovanne à double armature (1) positionnée de manière appropriée pour fonctionner, le canal d'amenée d'air (6) est agencé au moins localement au-dessus de l'ouverture d'amenée d'eau (16) de sorte que de l'air peut affluer dans l'espace d'amenée d'eau (15) en passant par le canal d'amenée d'air (6), et/ou
- au sein de l'électrovanne à double armature (1) positionnée de manière appropriée pour fonctionner, la première armature (4a) débouche au-dessus de la seconde armature (4b) et le canal d'amenée d'air (6) débouche ainsi au-dessus du canal d'évacuation d'eau (9) au sein de l'espace d'amenée d'eau (15).

6. Electrovanne à double armature selon l'une quelconque des revendications précédentes,
**caractérisée en ce que**,
l'électrovanne à double armature (1) présente dans le canal d'amenée d'air (6) une première vanne à siège à boule qui, au sein de l'électrovanne à double armature (1) positionnée de manière appropriée pour fonctionner, dans la position d'ouverture de la première armature (4a) et en cas de surpression dans l'espace d'amenée d'eau (15), bloque le canal d'amenée d'air (6) et, dans la position d'ouverture de la première armature (4a) et en cas de pression négative dans l'espace d'amenée d'eau (15), débloque ledit canal d'amenée d'air.

7. Electrovanne à double armature selon l'une quelconque des revendications précédentes,
**caractérisée en ce que**,
l'électrovanne à double armature (1) présente au niveau de l'ouverture d'amenée d'eau (16) une seconde vanne à siège à boule (24) qui, au sein de l'électrovanne à double armature (1) positionnée de manière appropriée pour fonctionner, débloque l'ouverture d'amenée d'eau (16) lorsque l'eau s'écoule à travers la seconde vanne à siège à boule (24) et bloque l'ouverture d'amenée d'eau (16) lorsque le carburant s'écoule à travers la seconde vanne à siège à boule (24).

8. Electrovanne à double armature selon la revendication 7,
**caractérisée en ce que**,
la seconde vanne à siège à boule (24) présente une boule flottante (25) dont la densité est comprise entre la densité de l'eau et la densité du carburant, de sorte que, au sein de l'électrovanne à double armature (1) positionnée de manière appropriée pour fonctionner, la boule flottante (25) flotte dans le carburant et bloque la circulation à travers l'ouverture d'amenée d'eau.

9. Electrovanne à double armature selon l'une quelconque des revendications précédentes,
**caractérisée en ce que**,
- un premier moyen d'étanchéité (7a), assurant l'étanchéité du canal d'amenée d'air (6) par rapport à l'espace d'amenée d'eau (15) dans la position de fermeture de la première armature (4a), est fixé au niveau de la première armature (4a) et/ou
- un second moyen d'étanchéité (7b), assurant l'étanchéité du canal d'évacuation d'eau (9) par rapport à l'espace d'amenée d'eau (15) dans la position de fermeture de la seconde armature (4b), est fixé au niveau de la seconde armature (4b).

10. Electrovanne à double armature selon l'une quelconque des revendications précédentes,
**caractérisée en ce que**,
- les deux armatures (4a, 4b) sont agencées de manière à pouvoir être guidées le long de l'axe d'ajustement (5) au sein d'un espace de guidage (3), et
- au moins une butée (10), avec laquelle les deux armatures (4a, 4b) sont en contact dans la position d'ouverture, est réalisée pour les deux armatures (4a, 4b) au sein de l'espace de guidage (3).

11. Système de filtre à carburant (22), situé du côté aspiration, d'un véhicule automobile,
- dans lequel le système de filtre à carburant (22) présente une région de collecte d'eau (23) permettant de collecter de l'eau séparée du carburant et une électrovanne à double armature (1) selon l'une quelconque des revendications précédentes,
- dans lequel la région de collecte d'eau (23) est reliée de manière fluidique à l'électrovanne à double armature (1) de sorte que l'eau peut s'écouler hors de la région de collecte d'eau (23) du système de filtre à carburant en passant par l'électrovanne à double armature (1).
